# EUROPEAN PATENT SPECIFICATION

(11) **EP 3 832 677 B1**
(45) Date of publication and mention of the grant of the patent: **04.06.2025**
(21) Application number: 19854341.5
(22) Date of filing: 29.08.2019
(51) Int. Cl.: H01F 1/113, H01F 41/02, H01F 1/11

(54) **FERRITE POWDER FOR BONDED MAGNET AND METHOD FOR PRODUCING SAME**
FERRITPULVER FÜR VERBUNDMAGNET UND VERFAHREN ZU DESSEN HERSTELLUNG
POUDRE DE FERRITE POUR AIMANT À LIANT ET SON PROCÉDÉ DE FABRICATION

(30) Priority: 31.08.2018 JP 2018163374; 26.08.2019 JP 2019153865
(43) Date of publication of application: 09.06.2021
(73) Proprietor: DOWA ELECTRONICS MATERIALS CO., LTD., Chiyoda-ku Tokyo 101-0021 (JP); Dowa F-tec Co., Ltd., Kume-gun, Okayama 708-1523 (JP)
(72) Inventor: YAMADA, Tomoya, Kume-gun, Okayama 708-1523 (JP); TSUBOI, Satoru, Kume-gun, Okayama 708-1523 (JP); UEMURA, Kazuyuki, Kume-gun, Okayama 708-1523 (JP); BABA, Takuyuki, Tokyo 102-0081 (JP); MISHIMA, Yasunobu, Kume-gun, Okayama 708-1523 (JP)
(74) Representative: Manitz Finsterwald Patent- und Rechtsanwaltspartnerschaft mbB
(86) International application number: PCT/JP2019/033932
(87) International publication number: WO 2020/045573

(56) References cited:
- EP-A1- 0 964 411
- EP-A1- 2 199 266
- WO-A1-2011/004791
- WO-A1-2017/200091
- CN-A- 106 866 131
- CN-A- 107 337 447
- JP-A- 2007 297 233
- JP-A- 2009 188 420
- JP-A- 2016 157 939
- US-A1- 2019 122 792

## Description

### Technical Field

The present invention relates generally to a ferrite powder for bonded magnet and a method for producing the same. More specifically, the invention relates to a ferrite powder for bonded magnet, which contains coarse and fine particles of a ferrite, and a method for producing the same.

### Background Art

A method for producing a ferrite powder for bonded magnet according to the preamble of claim 1 and a ferrite powder according to the preamble of claim 5 are known from Patent Document 1.

As magnets having strong magnetic force, such as magnets used for small motors for use in audio visual equipment, office automation equipment, automotive electric components and so forth, and magnets used for magnet rolls of copying machines and so forth, ferritic sintered magnets are conventionally used. However, in ferritic sintered magnets, there is a problem in that it is difficult to process them in complicated shapes, in addition to the problems in that the productivity thereof is bad since they may be broken and since it is required to polish them.

For that reason, in recent years, as magnets having strong magnetic force, such as magnets used for small motors for use in office automation equipment, audio visual equipment, automotive electric components and so forth, bonded magnets of rare earth magnets are used. However, there are problems in that the costs of rare earth magnets are higher than about twenty times as high as the costs of ferrite sintered magnets and that rare earth magnets are easy to rust off, so that it is desired to use ferrite bonded magnets in place of ferrite sintered magnets.

As such a ferrite powder for bonded magnet, there is proposed a strontium ferrite particle powder for bonded magnet, which is a magnetoplumbite-type strontium ferrite particle powder which has a composition of (Sr₁₋ₓAₓ)O·n[(Fe_{1-y-z}Co_{y}Zn_{z})₂O₃] (wherein A is La, La-Nd, La-Pr or La-Nd-Pr, n = 5.80 to 6.10, x = 0.1 to 0.5, y = 0.0083 to 0.042, 0 ≦ z < 0.0168), a saturation magnetization value *σ* s of not less than 73 Am²/kg (73 emu/g) and an average particle diameter of 1.0 to 3.0 *µ*m and which contains 60 % or more of plate-shaped particles in a number-based percentage in the strontium ferrite particle powder for bonded magnet (see, Patent Document 2).

Further ferrite powders for a bonded magnet are disclosed in Patent Documents 3 and 4.

### Prior Art Document(s)

### Patent Document(s)

Patent Document 1: Chinese Application CN 107337447 A
Patent Document 2: Japanese Patent Laid-Open No. 2002-175907 (Paragraph Number 0025)
Patent Document 3: European Patent Application EP 0 964 411 A1
Patent Document 4: International Application WO 2017/200091 A1

### Summary of the Invention

### Problem to be solved by the Invention

However, the strontium ferrite particle powder for bonded magnet disclosed in Patent Document 2 contains many plate-shaped particles. For that reason, if the particle powder is attempted to be arranged in the magnetic field direction thereof by the magnetic field orientation thereof, each of the plated-particles interferes with the orientation thereof to each other, so that it is difficult to produce a bonded magnet having a high orientation.

It is therefore an object of the present invention to eliminate the aforementioned conventional problems and to provide a ferrite powder for bonded magnet, which can obtain a bonded magnet having a high residual magnetization Br by the magnetic field orientation thereof, and a method for producing the same.

### Means for solving the Problem

In order to accomplish the aforementioned object, the inventors have diligently studied and found that it is possible to produce a ferrite powder for bonded magnet, which can obtain a bonded magnet having a high residual magnetization Br by the magnetic field orientation thereof, if a complex oxide powder of iron, strontium, lanthanum and cobalt is mixed with iron oxide to be granulated to be fired. Thus, the inventors have made the present invention.

According to the present invention, there is provided a method for producing a ferrite powder for bonded magnet, the method comprising the steps of: mixing a complex oxide powder of iron, strontium, lanthanum and cobalt, with iron oxide to obtain a mixture; granulating the mixture to obtain a granulated mixture; and firing the granulated mixture.

This method for producing a ferrite powder for bonded magnet, preferably further comprises the steps of: coarsely pulverizing a fired substance, which is obtained by firing the granulated mixture, to obtain a coarsely pulverized powder; pulverizing the coarsely pulverized powder to obtain a pulverized powder; and annealing the pulverized powder. According to the invention, the complex oxide powder is obtained by a method comprising the steps of: mixing strontium carbonate, lanthanum oxide, iron oxide and cobalt oxide to obtain a mixture; granulating the mixture to obtain a granulated mixture; firing the granulated mixture at a temperature of 1000 to 1250 °C to obtain a fired substance; and pulverizing the fired substance. The firing after granulating the mixture of the complex oxide powder with the iron oxide is preferably carried out at a temperature of 1100 to 1400 °C. The complex oxide powder is preferably mixed with the iron oxide so that a molar ratio (Fe / (Sr + La)) of Fe in the iron oxide to the total of Sr and La is in the range of from 4.5 to 11.7, when the complex oxide powder is mixed with the iron oxide.

According to the present invention, there is provided a ferrite powder for bonded magnet, which has a composition of (Sr₁₋ₓLaₓ) · (Fe_{1-y}Co_{y})ₙO_{19-z} (wherein 0 < x ≦ 0.5, 0 < y ≦ 0.04, 10.0 ≦ n ≦ 12.5, -1.0 ≦ z ≦ 3.5) and which has an average particle diameter of 1.3 to 2.5 *µ*m.

This ferrite powder for bonded magnet preferably has a specific surface area of 1.0 to 2.1 m²/g. The average value of ratios is not greater than 1.55, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being *1.0 µ*m or more. If a bonded magnet, which is a cylindrical bonded magnet having a diameter of 15 mm x a height of 8 mm (the direction of magnetic field orientation of the bonded magnet being a direction along the central axis thereof), is produced by injection-molding a kneaded pellet having an average diameter of 2 mm at a temperature of 300 °C at a molding pressure of 8.5 N/mm² in a magnetic field of 9.7 kOe (1 kOe = 79.5775 x 10³ A/m), the kneaded pellet being produced by kneading a mixture at 230 °C, the mixture being obtained by filling and mixing 90.0 parts by weight of the ferrite powder for bonded magnet, 0.8 parts by weight of a silane coupling agent, 0.8 parts by weight of a lubricant and 8.4 parts by weight of a polyamide resin powder in a mixer, the bonded magnet has a residual magnetization Br of not less than 2950 G (1 G = 10⁻⁴ T) when the residual magnetization Br is measured in a measuring magnetic field of 10 kOe. The bonded magnet has a maximum energy product BHₘₐₓ of not less than 2.15 MGOe (1 MGOe = 7.95775 x 10³ J/m³ = 7.95775 kJ/m³) when the maximum energy product BHₘₐₓ is measured in a measuring magnetic field of 10 kOe.

According to the present invention, there is provided a bonded magnet comprising: the above-described ferrite powder for bonded magnet; and a binder.

### Effects of the Invention

According to the present invention, it is possible to produce a ferrite powder for bonded magnet, which can obtain a bonded magnet having a high residual magnetization Br by the magnetic field orientation thereof.

### Brief Description of the Drawings

FIG. 1 is a chart showing the results measured by the powder X-ray diffraction (XRD) analysis with respect to a ferrite powder for bonded magnet obtained in Example 1;
FIG. 2 is a scanning electron microscope (SEM) image of a cross-section of a bonded magnet obtained in Example 1; and
FIG. 3 is a SEM image of a cross-section of a bonded magnet obtained in Comparative Example 1.

### Mode for Carrying Out the Invention

In the preferred embodiment of a method for producing a ferrite powder for bonded magnet according to the present invention, a complex oxide powder of iron, strontium, lanthanum and cobalt is mixed with iron oxide (preferably hematite (α - Fe₂O₃)) (so that the molar ratio (Fe / (Sr + La)) of Fe in the iron oxide to the total of Sr and La is preferably in the range of from 4.5 to 11.7 and more preferably in the range of from 9.0 to 11.0), to be granulated to be fired (preferably at a temperature of 1100 to 1400 °C, more preferably at a temperature of 1100 to 1300 °C and most preferably at a temperature of 1150 to 1250 °C) to obtain a fired substance which is coarsely pulverized to obtain a coarsely pulverized powder which is pulverized to be annealed (preferably at a temperature of 950 to 1000 °C).

The above-described complex oxide powder of iron, strontium, lanthanum and cobalt is obtained by a method comprising the steps of: mixing strontium carbonate, lanthanum oxide, iron oxide and cobalt oxide to obtain a mixture; granulating the mixture to obtain a granulated mixture; firing the granulated mixture preferably at a temperature of 1000 to 1250 °C, more preferably at a temperature of 1050 to 1200 °C and most preferably at a temperature of 1050 to 1150 °C to obtain a fired substance; and pulverizing the fired substance.

The above-described coarsely pulverized powder is preferably pulverized (wet-pulverized) (preferably for 20 to 80 minutes) by means of a wet attritor or the like to obtain a slurry. The slurry thus obtained is preferably filtered to obtain a solid body. The solid body thus obtained is preferably dried to obtain a dry cake. The dry cake thus obtained is preferably crushed by means of a mixer to obtain a crushed substance. The crushed substance thus obtained is preferably pulverized by means of a vibratory ball mill or the like to obtain a pulverized substance. The pulverized substance thus obtained is preferably annealed.

Thus, it is possible to produce a ferrite powder for bonded magnet, which has a composition expressed by (Sr₁₋ₓLaₓ) · (Fe_{1-y}Co_{y})ₙO_{19-z} (wherein 0 < x ≦ 0.5, 0 < y ≦ 0.04, 10.0 ≦ n ≦ 12.5, -1.0 ≦ z ≦ 3.5).

The ferrite powder for bonded magnet according to the present invention has a composition of (Sr₁₋ₓLaₓ) · (Fe_{1-y}Co_{y})ₙO_{19-z} wherein 0 < x ≦ 0.5 (preferably 0.03 ≦ x ≦ 0.5, more preferably 0.1 ≦ x ≦ 0.5), 0 < y ≦ 0.04 (preferably 0.004 ≦ y ≦ 0.04), 10.0 ≦ n ≦ 12.5 (preferably 10.0 ≦ n ≦ 12.0), -1.0 ≦ z ≦ 3.5 (preferably -0.5 ≦ z ≦ 3.5), the ferrite powder having an average particle diameter of 1.3 to 2.5 *µ*m (preferably 1.3 to 2.0 *µ*m).

The specific surface area of this ferrite powder for bonded magnet is preferably in the range of from 1.0 m²/g to 2.1 m²/g and more preferably in the range of from 1.2 m²/g to 2.0 m²/g.

After 10 g of the ferrite powder for bonded magnet is filled in a cylindrical die having an inside diameter of 2.54 cm*ϕ*, when a pressure of 1 ton/cm² (1 ton/cm² = 98 MPa) is applied to the ferrite powder for bonded magnet, the density of the ferrite powder for bonded magnet is measured as the compression density (CD) of the ferrite powder for bonded magnet. The compression density (CD) thus measured is preferably in the range of from 3.0 g/cm³ to 4.0 g/cm³ and more preferably in the range of from 3.2 g/cm³ to 3.6 g/cm³.

After 8 g of the ferrite powder for bonded magnet and 0.4 cc of a polyester resin are kneaded in a mortar, 7 g of the kneaded substance thus obtained is filled in a die having an inside diameter of 15 mm*ϕ* to obtain a filled substance, and a pressure of 2 ton/cm² (196 MPa) is applied to the filled substance for 60 seconds. The molded article thus obtained is taken out from the die to be dried at 150 °C for 30 minutes to produce a pressurized powder body. As the magnetic characteristics of this pressurized powder body, the coercivity iHc and residual magnetization Br of the pressurized powder body are measured in a measuring magnetic field of 10 kOe by means of a BH tracer. The coercivity iHc thus measured is preferably in the range of from 2000 Oe to 4000 Oe and more preferably in the range of from 2300 Oe to 3500 Oe (1 Oe = 79,5775 A/m). The residual magnetization Br thus measured is preferably in the range of from 1700 G to 2000 G and more preferably 1800 G to 1950 G.

It is known that the residual magnetization Br of a ferrite magnetic material having a magnetoplumbite-type crystal structure generally has a negative temperature coefficient, and the coercivity Hc thereof generally has a positive temperature coefficient, and that the temperature coefficient of the coercivity Hc thereof is in the range of from about 0.2 %/°C to about 0.3 %/°C. That is, the coercivity Hc of the ferrite magnetic material having the magnetoplumbite-type crystal structure is lower as the temperature is lower. For that reason, when the ferrite magnetic material having the magnetoplumbite-type crystal structure is used for a bonded magnet, unless the ferrite magnetic material has a higher coercivity Hc than necessary, there is a problem in that irreversible demagnetization (low-temperature demagnetization) is caused by a temperature cycle from a low temperature to a high temperature. There is particularly a problem in the low-temperature demagnetization of such a ferrite magnetic material, when the ferrite magnetic material is used as the material of a bonded magnet, which is used for an outdoor unit for an air conditioner, a motor for an automotive vehicle or the like, which are greatly influenced by the variation in outdoor air temperature. For that reason, the temperature coefficient of the coercivity Hc of the ferrite powder for bonded powder is preferably not higher than 0.1 %/°C, the temperature coefficient of the coercivity Hc thereof being calculated from the rate of variability in the coercivity Hc which is measured at three points of -25 °C, 0 °C and 25 °C by a full loop (at a sweep applying rate of 200 Oe/second) in which a magnetic field is applied to 5 T (10,000 Oe), the ferrite powder for bonded powder being fixed in a measuring cell by cooling 20 mg of the ferrite powder for bonded powder and 10 mg of paraffin, which are filled in the measuring cell to be held at 60 °C for 10 minutes.

After 90.0 parts by weight of the ferrite powder for bonded magnet, 0.8 parts by weight of a silane coupling agent, 0.8 parts by weight of a lubricant and 8.4 parts by weight of a polyamide resin powder are filled and mixed in a mixer to obtain a mixture which is kneaded at 230 °C to produce a kneaded pellet having an average diameter of 2 mm, the kneaded pellet is injection-molded at a temperature of 300 °C at a molding pressure of 8.5 N/mm² in a magnetic field of 9.7 kOe to produce a cylindrical bonded magnet having a diameter of 15 mm x a height of 8 mm (the direction of magnetic field orientation of the bonded magnet being a direction along the central axis thereof). When the coercivity iHc, residual magnetization Br and maximum energy product BHₘₐₓ of the bonded magnet thus produced are measured in a measuring magnetic field of 10 kOe, the bonded magnet has a coercivity iHc of preferably 2200 to 3700 Oe (more preferably 2400 to 3500 Oe), a residual magnetization Br of preferably not less than 2950 G (more preferably of not less than 2970 G) and a maximum energy product BHₘₐₓ of preferably not less than 2.15 MGOe (more preferably of 2.2 to 2.5 MGOe).

After the above-described bonded magnet is cut in parallel to the direction of the applied magnetic field, the shape of particles on the cut surface of the bonded magnet is observed at a magnification of 2,000 by means of an electron microscope to obtain an electron micrograph. The electron micrograph thus obtained is binarized to obtain a ratio (length of major axis / length of minor axis) (aspect ratio) of a length of a major axis (the maximum value of distances between two parallel straight lines (each of the distances being the length of a line segment drawn in a direction perpendicular to the two parallel straight lines) when one particle is put between the straight lines) of a corresponding one of the particles to a length of a minor axis (the minimum value of distances between two parallel straight lines when one particle is put between the straight lines) of the corresponding one of the particles, as a shape index of the particles, the length of the major axis of the corresponding one of the particles being 1.0 *µ*m or more. That is, a volume average aspect ratio weighted by volume is calculated as volume = length of major axis x length of major axis x length of minor axis. The aspect ratio thus obtained is preferably not greater than 1.55. If the aspect ratio is not greater than 1.55, the particles of the ferrite powder for bonded magnet are easily arranged in the direction of the magnetic field by the magnetic field orientation, so that it is possible to easily produce a bonded magnet having a high orientation of particles, a high residual magnetization Br and a high maximum energy product BHₘₐₓ.

### Examples

Examples of a ferrite powder for bonded magnet and a method for producing the same according to the present invention will be described below in detail.

### [Example 1]

### (production of Coarse Pulverized Powder)

First, strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) (serving as iron oxide) and cobalt oxide (Co₃O₄, specific surface area = 3.3 m²/g) were weighed to be mixed in a molar ratio of Sr : La : Fe : Co = 0.70 : 0.30 : 0.70 : 0.30. The mixture thus obtained was granulated while water was added thereto in a pan pelletizer. The granulated spherical particles having diameters of 3 to 10 mm thus obtained were put into an internal-combustion rotary kiln to be fired (primary-fired) at 1100 °C for 20 minutes in the atmosphere to obtain a fired substance. This fired substance was pulverized by means of a roller mill to obtain a complex oxide powder of iron, strontium, lanthanum and cobalt. The specific surface area (SSA) of the complex oxide powder was measured by means of a specific surface area measuring apparatus (Monosorb produced by Quantachrome Corporation) using the single point BET method. As a result, the specific surface area of the complex oxide powder was 3.5 m²/g.

This complex oxide powder and hematite (α - Fe₂O₃, specific surface area = 5.3 m²/g) (serving as iron oxide) were weighed to be mixed so that the molar ratio (Fe / (Sr + La)) of Fe in the oxide to the total of Sr and La was 10.0. This mixture thus obtained was mixed with 0.17 % by weight of boric acid and 2.3 % by weight of potassium chloride. Then, water was added thereto to granulate the mixture. The granulated spherical particles having diameters of 3 to 10 mm thus obtained were put into an internal-combustion rotary kiln to be fired (secondary-fired) at 1250 °C (firing temperature) for 20 minutes in the atmosphere. The fired substance thus obtained was pulverized by means of a roller mill to obtain a coarsely pulverized powder.

### (Production of Ferrite Powder for Bonded Magnet)

First, 100 parts by weight of the coarsely pulverized powder thus obtained and 150 parts by weight of water were put into a wet attritor to be pulverized for 20 minutes to obtain a slurry. The slurry thus obtained was filtered to obtain a solid body. The solid body thus obtained was dried at 150 °C for 10 hours in the atmosphere to obtain a dry cake. The dry cake thus obtained was crushed by means of a mixer to obtain a crushed substance. The crushed substance thus obtained was pulverized at a rotation number of 1800 rpm in an amplitude of 8 mm for 20 minutes by means of a vibratory ball mill (Uras Vibrator KEC-8-YH produced by MURAKAMI SEIKI MFG CO., LTD.) using steel balls having a diameter of 12 mm as media. The pulverized substance thus obtained was annealed at 985 °C for 30 minutes in the atmosphere by means of an electric furnace to obtain a ferrite powder for bonded magnet.

The composition analysis of the ferrite powder for bonded magnet was carried out by calculating the ingredient amount of each element by the fundamental parameter method (FP method) by means of a fluorescent X-ray analyzer (ZSX 100e produced by Rigaku Corporation). In this composition analysis, the ferrite powder for bonded magnet was filled in a measuring cell to be molded by applying a pressure of 10 tons/cm² thereto for 20 seconds, to carry out the qualitative analysis thereof at a measuring diameter of 30 mm in a measuring mode of EZ scan mode in the sample form of an oxide for a measuring time of standard time in a vacuum, and then, to carry out the quantitative analysis of the detected constituent elements. As a result, the ferrite powder for bonded magnet was detected to contain 0.1 % by weight of Cr₂O₃, 0.3 % by weight of MnO, 85.3 % by weight of Fe₂O₃, 2.4 % by weight of Co₂O₃, 6.8 % by weight of SrO, 0.1 % by weight of BaO and 4.9 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.026, n = 11.5 and z = 0.79. Furthermore, z was calculated so that the total valence of the chemical formula was 0 (zero) assuming that the valence of Sr was +2 and the valence of La was +3, the valence of Fe being +3, the valence of Co being +2 and the valence of O being -2.

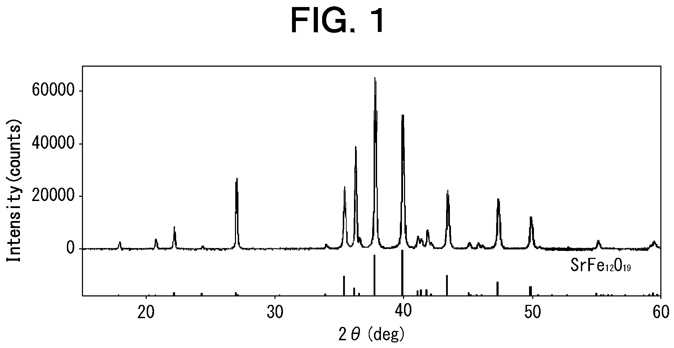

With respect to this ferrite powder for bonded magnet, a powder X-ray diffractometer (Miniflex 600 produced by Rigaku Corporation) was used for carrying out measurement based on the powder X-ray diffraction (XRD) analysis on conditions containing a tube voltage of 40 kV, a tube current of 15 mA, a measuring range of 15° to 60° , a scan speed of 1° /minute and a scan width of 0.02° . The results of the measurement are shown in FIG. 1. Furthermore, the peak positions of SrFe₁₂O₁₉ having a usual M-type ferrite structure are shown on the lower side of FIG. 1. It can be seen from FIG. 1 that all of the peaks are measured at the same positions as those of SrFe₁₂O₁₉, so that it is confirmed that the ferrite powder for bonded magnet in this example has the M-type ferrite structure. These results are the same as those in Examples 2 through 8 and Comparative Examples 1 through 3 which will be described later.

The average particle diameter (APD) of the ferrite powder for bonded magnet was measured by an air transmission method by means of a specific surface area measuring apparatus (SS-100 produced by Shimadzu Corporation). As a result, the average particle diameter was 1.72 *µ*m. The specific surface area (SSA) of the ferrite powder for bonded magnet was measured by the same method as the above-described method. As a result, the specific surface area was 1.47 m²/g.

After 10 g of the ferrite powder for bonded magnet was filled in a cylindrical die having an inside diameter of 2.54 cm*ϕ*, when a pressure of 1 ton/cm² was applied to the ferrite powder for bonded magnet, the density of the ferrite powder for bonded magnet was measured as the compression density (CD) of the ferrite powder for bonded magnet. As a result, the compression density (CD) was 3.45 g/cm³.

After 8 g of the ferrite powder for bonded magnet and 0.4 cc of a polyester resin (P-resin produced by Nichika Inc.) were kneaded in a mortar, 7 g of the kneaded substance thus obtained was filled in a die having an inside diameter of 15 mm ϕ, and a pressure of 2 ton/cm² was applied to the filled substance for 60 seconds. The molded article thus obtained was taken out from the die to be dried at 150 °C for 30 minutes to obtain a pressurized powder body. As the magnetic characteristics of the pressurized powder body thus obtained, the coercivity iHc and residual magnetization Br thereof were measured in a measuring magnetic field of 10 kOe by means of a BH tracer (TRF-5BH produced by Toei Industry Co., Ltd.). As a result, the coercivity iHc was 3060 Oe, and the residual magnetization Br was 1870 G.

After 20 mg of the ferrite powder for bonded powder and 10 mg of paraffin were filled in a measuring cell to be held at 60 °C for 10 minutes, they were cooled to be fixed in the measuring cell. Then, a vibrating sample magnetometer (VSM-5HSC produced by Toei Industry Co., Ltd.) was used for measuring the coercivity Hc of the ferrite powder for bonded magnet at three points of -25 °C, 0 °C and 25 °C by a full loop (at a sweep applying rate of 200 Oe/second) in which a magnetic field was applied to 5 T (10,000 Oe). From the variability in the coercivity H, the temperature coefficient of the coercivity Hc was calculated. As a result, the temperature coefficient of the coercivity Hc of the ferrite powder for bonded powder was - 0.024 %/°C. Furthermore, this temperature coefficient was calculated as the inclination of a related expression of y and x, the related expression being obtained by the least-square method assuming that the coercivity Hc was y and that the temperature was x.

### (Production of Bonded Magnet)

First, 90.0 parts by weight of the ferrite powder for bonded magnet, 0.8 parts by weight of a silane coupling agent (Z-6094N produced by Toray Dow Corning, Co., Ltd.), 0.8 parts by weight of a lubricant (VPN-212P produced by Henkel AG & Co. KGaA) and 8.4 parts by weight of a polyamide resin powder (P-1011F produced by Ube Industries, Inc.) were weighed to be filled in a mixer to be mixed to obtain a mixture. The mixture thus obtained was kneaded at 230 °C to obtain a kneaded pellet having an average diameter of 2 mm. The kneaded pellet thus obtained was loaded in an injection molding machine (produced by Sumitomo Heavy Industries, Ltd.) to be injection-molded at a temperature of 300 °C at a molding pressure of 8.5 N/mm² in a magnetic field of 9.7 kOe to obtain a cylindrical bonded magnet (F.C. 90.0 % by weight, 9.7 kOe) having a diameter of 15 mm x a height of 8 mm (the direction of magnetic field orientation of the bonded magnet was a direction along the central axis thereof).

As the magnetic characteristics of the bonded magnet thus obtained, a BH tracer (TRF-5BH produced by Toei Industry Co., Ltd.) was used for measuring the coercivity iHc, residual magnetization Br and maximum energy product BHₘₐₓ of the bonded magnet in a measuring magnetic field of 10 kOe. As a result, the coercivity iHc was 3017 Oe, the residual magnetization Br was 3069 G, and the maximum energy product BHₘₐₓ was 2.33 MGOe.

After the bonded magnet was cut in parallel to the direction of the magnetic field applied thereto, the shape of particles on the cut surface of the bonded magnet was observed at a magnification of 2,000 by means of a scanning electron microscope (SEM) to obtain an SEM image. The SEM image thus obtained was binarized to obtain an average value (aspect ratio) of ratios (length of major axis / length of minor axis) as a shape index of the particles, each of the ratios being a ratio of a length of a major axis (the maximum value of distances between two parallel straight lines when one particle was put between the straight lines) of a corresponding one of 200 particles or more (the whole outline of each of the particles being observed in one field of vision or more on the SEM image) to a length of a minor axis (the minimum value of distances between two parallel straight lines when one particle was put between the straight lines) of the corresponding one of the particles, the length of the major axis of the corresponding one of the particles being *1.0 µ*m or more. As a result, the aspect ratio was 1.43. Furthermore, as this aspect ratio, a volume average aspect ratio weighted by volume was calculated as volume = length of major axis x length of major axis x length of minor axis assuming that each of the particles was a plate particle.

### [Example 2]

A ferrite powder for bonded magnet was obtained by the same method as that in Example 1, except that the pulverizing time using the wet attritor was 40 minutes.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 85.1 % by weight of Fe₂O₃, 2.5 % by weight of Co₂O₃, 0.1 % by weight of ZnO, 6.7 % by weight of SrO, 0.1 % by weight of BaO and 4.9 % by weight of La₂O₃, so that Sr, La, Fe and Co being the main components of the ferrite powder for bonded magnet were detected. Furthermore, although elements, such as Cr, Mn, Zn and Ba, considered to be derived from impurities in the raw materials, were detected, the amount of each of the elements was a very small amount of 0.4 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.028, n = 11.6 and z = 0.64.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.62 *µ*m, the specific surface area was 1.62 m²/g, and the compression density (CD) was 3.40 g/cm³. The coercivity iHc of the pressurized powder body was 3130 Oe, and the residual magnetization Br thereof was 1870 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3052 Oe, the residual magnetization Br was 3038 G, and the maximum energy product BHₘₐₓ was 2.28 MGOe. The aspect ratio was 1.54.

### [Example 3]

A ferrite powder for bonded magnet was obtained by the same method as that in Example 1, except that the pulverizing time using the wet attritor was 80 minutes.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 85.0 % by weight of Fe₂O₃, 2.5 % by weight of Co₂O₃, 0.1 % by weight of ZnO, 6.7 % by weight of SrO, 0.1 % by weight of BaO and 5.0 % by weight of La₂O₃, so that Sr, La, Fe and Co being the main components of the ferrite powder for bonded magnet were detected. Furthermore, although elements, such as Cr, Mn, Zn and Ba, considered to be derived from impurities in the raw materials, were detected, the amount of each of the elements was a very small amount of 0.4 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.028, n = 11.5 and z = 0.79.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.42 *µ*m, the specific surface area was 1.96 m²/g, and the compression density (CD) was 3.42 g/cm³. The coercivity iHc of the pressurized powder body was 3310 Oe, and the residual magnetization Br thereof was 1870 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3193 Oe, the residual magnetization Br was 3036 G, and the maximum energy product BHₘₐₓ was 2.28 MGOe. The aspect ratio was 1.50.

### [Example 4]

A ferrite powder for bonded magnet was obtained by the same method as that in Example 1, except that the temperature of the secondary firing was 1150 °C.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 85.0 % by weight of Fe₂O₃, 2.6 % by weight of Co₂O₃, 6.8 % by weight of SrO, 0.1 % by weight of BaO and 4.9 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.31, y = 0.029, n = 11.5 and z = 0.83.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.53 *µ*m, the specific surface area was 1.65 m²/g, and the compression density (CD) was 3.29 g/cm³. The coercivity iHc of the pressurized powder body was 3410 Oe, and the residual magnetization Br thereof was 1820 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3407 Oe, the residual magnetization Br was 2985 G, and the maximum energy product BHₘₐₓ was 2.21 MGOe. The aspect ratio was 1.54.

### [Example 5]

A ferrite powder for bonded magnet was obtained by the same method as that in Example 1, except that the same complex oxide powder as that in Example 1 and hematite (α -Fe₂O₃, specific surface area = 5.3 m²/g) (serving as iron oxide) were weighed to be mixed so that the molar ratio (Fe / (Sr + La)) of Fe in the iron oxide to the total of Sr and La was 10.4.

The composition analysis of the ferrite powder for bonded magnet was carried out by the same method as that in Example 1. As a result, the ferrite powder for bonded magnet was detected to contain 0.4 % by weight of MnO, 85.7 % by weight of Fe₂O₃, 2.4 % by weight of Co₂O₃, 0.1 % by weight of ZnO, 6.5 % by weight of SrO, 0.1 % by weight of BaO and 4.7 % by weight of La₂O₃, so that Sr, La, Fe and Co being the main components of the ferrite powder for bonded magnet were detected. Furthermore, although elements, such as Mn, Zn and Ba, considered to be derived from impurities in the raw materials, were detected, the amount of each of the elements was a very small amount of 0.4 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.31, y = 0.026, n = 12.0 and z = -0.04.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.70 *µ*m, the specific surface area was 1.56 m²/g, and the compression density (CD) was 3.40 g/cm³. The coercivity iHc of the pressurized powder body was 2780 Oe, and the residual magnetization Br thereof was 1890 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2546 Oe, the residual magnetization Br was 3009 G, and the maximum energy product BHₘₐₓ was 2.23 MGOe. The aspect ratio was 1.53.

### [Example 6]

A ferrite powder for bonded magnet was obtained by the same method as that in Example 1, except that strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) and cobalt oxide (Co₃O₄, specific surface area = 3.3 m²/g) were weighed to be mixed in a molar ratio of Sr : La : Fe : Co = 0.70 : 0.30 : 0.85 : 0.15.

The composition analysis of the ferrite powder for bonded magnet was carried out by the same method as that in Example 1. As a result, the ferrite powder for bonded magnet was detected to contain 0.1 % by weight of Cr₂O₃, 0.3 % by weight of MnO, 86.4 % by weight of Fe₂O₃, 1.2 % by weight of Co₂O₃, 6.7 % by weight of SrO, 0.1 % by weight of BaO and 5.0 % by weight of La₂O₃, so that Sr, La, Fe and Co being the main components of the ferrite powder for bonded magnet were detected. Furthermore, although elements, such as Cr, Mn, and Ba, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.014, n = 11.5 and z = 0.73.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.87 *µ*m, the specific surface area was 1.27 m²/g, and the compression density (CD) was 3.43 g/cm³. The coercivity iHc of the pressurized powder body was 2650 Oe, and the residual magnetization Br thereof was 1880 G. By the same methods as those in Example 1, the coercivity Hc of the ferrite powder for bonded magnet was measured, and the temperature coefficient of the coercivity Hc was calculated. As a result, the temperature coefficient was -0.063 %/°C.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2724 Oe, the residual magnetization Br was 3038 G, and the maximum energy product BHₘₐₓ was 2.29 MGOe. The aspect ratio was 1.52.

### [Example 7]

A ferrite powder for bonded magnet was obtained by the same method as that in Example 6, except that the temperature of the secondary firing was 1300 °C.

The composition analysis of the ferrite powder for bonded magnet was carried out by the same method as that in Example 1. As a result, the ferrite powder for bonded magnet was detected to contain 0.1 % by weight of Cr₂O₃, 0.3 % by weight of MnO, 86.5 % by weight of Fe₂O₃, 1.2 % by weight of Co₂O₃, 6.7 % by weight of SrO, 0.1 % by weight of BaO and 5.0 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.013, n = 11.5 and z = 0.61.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.84 µm, the specific surface area was 1.36 m²/g, and the compression density (CD) was 3.49 g/cm³. The coercivity iHc of the pressurized powder body was 2390 Oe, and the residual magnetization Br thereof was 1910 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2473 Oe, the residual magnetization Br was 3043 G, and the maximum energy product BHₘₐₓ was 2.29 MGOe. The aspect ratio was 1.49.

### [Example 8]

A ferrite powder for bonded magnet was obtained by the same method as that in Example 6, except that the temperature of the secondary firing was 1200 °C.

The composition analysis of the ferrite powder for bonded magnet was carried out by the same method as that in Example 1. As a result, the ferrite powder for bonded magnet was detected to contain 0.3 % by weight of MnO, 86.2 % by weight of Fe₂O₃, 1.3 % by weight of Co₂O₃, 0.2 % by weight of ZnO, 6.8 % by weight of SrO, 0.1 % by weight of BaO and 5.0 % by weight of La₂O₃, so that Sr, La, Fe and Co being the main components of the ferrite powder for bonded magnet were detected. Furthermore, although elements, such as Mn, Zn and Ba, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.014, n = 11.4 and z = 0.85.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.71 *µ*m, the specific surface area was 1.49 m²/g, and the compression density (CD) was 3.40 g/cm³. The coercivity iHc of the pressurized powder body was 2870 Oe, and the residual magnetization Br thereof was 1870 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2865 Oe, the residual magnetization Br was 3061 G, and the maximum energy product BHₘₐₓ was 2.32 MGOe. The aspect ratio was 1.47.

### [Example 9]

A ferrite powder for bonded magnet was obtained by the same method as that in Example 6, except that the complex oxide powder and hematite (serving as iron oxide) were weighed to be mixed so that the molar ratio (Fe / (Sr + La)) of Fe in the oxide to the total of Sr and La was 9.8.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 85.7 % by weight of Fe₂O₃, 1.3 % by weight of Co₂O₃, 6.9 % by weight of SrO, 0.1 % by weight of BaO and 5.3 % by weight of La₂O₃, so that Sr, La, Fe and Co being the main components of the ferrite powder for bonded magnet were detected. Furthermore, although elements, such as Mn, Zn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.33, y = 0.015, n = 11.0 and z = 1.46.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.90 *µ*m, the specific surface area was 1.32 m²/g, and the compression density (CD) was 3.41 g/cm³. The coercivity iHc of the pressurized powder body was 2840 Oe, and the residual magnetization Br thereof was 1840 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3038 Oe, the residual magnetization Br was 3004 G, and the maximum energy product BHₘₐₓ was 2.23 MGOe. The aspect ratio was 1.50.

### [Example 10]

A ferrite powder for bonded magnet was obtained by the same method as that in Example 6, except that the complex oxide powder and hematite (serving as iron oxide) were weighed to be mixed so that the molar ratio (Fe / (Sr + La)) of Fe in the oxide to the total of Sr and La was 10.4.

The composition analysis of the ferrite powder for bonded magnet was carried out by the same method as that in Example 1. As a result, the ferrite powder for bonded magnet was detected to contain 0.4 % by weight of MnO, 86.5 % by weight of Fe₂O₃, 1.2 % by weight of Co₂O₃, 0.2 % by weight of ZnO, 6.7 % by weight of SrO, 0.1 % by weight of BaO and 4.8 % by weight of La₂O₃, so that Sr, La, Fe and Co being the main components of the ferrite powder for bonded magnet were detected. Furthermore, although elements, such as Mn, Zn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.31, y = 0.014, n = 11.7 and z = 0.41.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.97 *µ*m, the specific surface area was 1.21 m²/g, and the compression density (CD) was 3.39 g/cm³. The coercivity iHc of the pressurized powder body was 2540 Oe, and the residual magnetization Br thereof was 1870 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2564 Oe, the residual magnetization Br was 3013 G, and the maximum energy product BHₘₐₓ was 2.24 MGOe. The aspect ratio was 1.51.

### [Example 11]

A ferrite powder for bonded magnet was obtained by the same method as that in Example 1, except that strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) and cobalt oxide (Co₃O₄, specific surface area = 3.3 m²/g) were weighed to be mixed in a molar ratio of Sr : La : Fe : Co = 0.80 : 0.20 : 0.80 : 0.20.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 86.5 % by weight of Fe₂O₃, 1.6 % by weight of Co₂O₃, 7.7 % by weight of SrO, 0.2 % by weight of BaO and 3.5 % by weight of La₂O₃, so that Sr, La, Fe and Co being the main components of the ferrite powder for bonded magnet were detected. Furthermore, although elements, such as Cr, Mn, and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.22, y = 0.018, n = 11.5 and z = 0.67.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.98 *µ*m, the specific surface area was 1.20 m²/g, and the compression density (CD) was 3.40 g/cm³. The coercivity iHc of the pressurized powder body was 2600 Oe, and the residual magnetization Br thereof was 1870 G. By the same methods as those in Example 1, the coercivity Hc of the ferrite powder for bonded magnet was measured, and the temperature coefficient of the coercivity Hc was calculated. As a result, the temperature coefficient was 0.020 %/°C.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2748 Oe, the residual magnetization Br was 3031 G, and the maximum energy product BHₘₐₓ was 2.26 MGOe. The aspect ratio was 1.49.

### [Example 12]

A ferrite powder for bonded magnet was obtained by the same method as that in Example 1, except that strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) and cobalt oxide (Co₃O₄, specific surface area = 3.3 m²/g) were weighed to be mixed in a molar ratio of Sr : La : Fe : Co = 0.80 : 0.20 : 0.90 : 0.10.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 87.2 % by weight of Fe₂O₃, 0.9 % by weight of Co₂O₃, 7.9 % by weight of SrO, 0.2 % by weight of BaO and 3.2 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.20, y = 0.010, n = 11.5 and z = 0.74.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 2.11 *µ*m, the specific surface area was 1.11 m²/g, and the compression density (CD) was 3.45 g/cm³. The coercivity iHc of the pressurized powder body was 2340 Oe, and the residual magnetization Br thereof was 1890 G. By the same methods as those in Example 1, the coercivity Hc of the ferrite powder for bonded magnet was measured, and the temperature coefficient of the coercivity Hc was calculated. As a result, the temperature coefficient was 0.052 %/°C.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2371 Oe, the residual magnetization Br was 3064 G, and the maximum energy product BHₘₐₓ was 2.31 MGOe. The aspect ratio was 1.43.

### [Example 13]

A ferrite powder for bonded magnet was obtained by the same method as that in Example 1, except that strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) and cobalt oxide (Co₃O₄, specific surface area = 3.3 m²/g) were weighed to be mixed in a molar ratio of Sr : La : Fe : Co = 0.90 : 0.10 : 0.90 : 0.10.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 87.6 % by weight of Fe₂O₃, 0.9 % by weight of Co₂O₃, 8.3 % by weight of SrO, 0.2 % by weight of BaO and 2.4 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.15, y = 0.010, n = 11.6 and z = 0.53.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 2.01 µm, the specific surface area was 1.09 m²/g, and the compression density (CD) was 3.39 g/cm³. The coercivity iHc of the pressurized powder body was 2290 Oe, and the residual magnetization Br thereof was 1920 G. By the same methods as those in Example 1, the coercivity Hc of the ferrite powder for bonded magnet was measured, and the temperature coefficient of the coercivity Hc was calculated. As a result, the temperature coefficient was 0.056 %/°C.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2414 Oe, the residual magnetization Br was 3038 G, and the maximum energy product BHₘₐₓ was 2.27 MGOe. The aspect ratio was 1.44.

### [Example 14]

A ferrite powder for bonded magnet was obtained by the same method as that in Example 6, except that the temperature of the primary firing was 1200 °C.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 86.2 % by weight of Fe₂O₃, 1.3 % by weight of Co₂O₃, 6.8 % by weight of SrO, 0.1 % by weight of BaO and 5.0 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.32, y = 0.014, n = 11.3 and z = 0.90.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.62 *µ*m, the specific surface area was 1.53 m²/g, and the compression density (CD) was 3.40 g/cm³. The coercivity iHc of the pressurized powder body was 3010 Oe, and the residual magnetization Br thereof was 1570 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3298 Oe, the residual magnetization Br was 2999 G, and the maximum energy product BHₘₐₓ was 2.24 MGOe. The aspect ratio was 1.49.

### [Example 15]

A ferrite powder for bonded magnet was obtained by the same method as that in Example 6, except that the temperature of the primary firing was 1050 °C.

The composition analysis of the ferrite powder for bonded magnet was carried out by the same method as that in Example 1. As a result, the ferrite powder for bonded magnet was detected to contain 0.1 % by weight of Cr₂O₃, 0.4 % by weight of MnO, 86.4 % by weight of Fe₂O₃, 1.3 % by weight of Co₂O₃, 6.5 % by weight of SrO, 0.1 % by weight of BaO and 5.1 % by weight of La₂O₃, so that Sr, La, Fe and Co being the main components of the ferrite powder for bonded magnet were detected. Furthermore, although elements, such as Cr, Mn and Ba, considered to be derived from impurities in the raw materials, were detected, the amount of each of the elements was a very small amount. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.34, y = 0.014, n = 11.7 and z = 0.40.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.88 *µ*m, the specific surface area was 1.21 m²/g, and the compression density (CD) was 3.41 g/cm³. The coercivity iHc of the pressurized powder body was 2950 Oe, and the residual magnetization Br thereof was 1850 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2880 Oe, the residual magnetization Br was 2998 G, and the maximum energy product BHₘₐₓ was 2.23 MGOe. The aspect ratio was 1.53.

### [Comparative Example 1]

A ferrite powder for bonded magnet was obtained by the same method as that in Example 1, except that strontium carbonate (SrCO₃, specific surface area = 5.8 m²/g), lanthanum oxide (La₂O₃, specific surface area = 3.8 m²/g), hematite (α - Fe₂O₃, specific surface area = 5.3 m²/g) and cobalt oxide (Co₃O₄, specific surface area = 3.3 m²/g) were weighed to be mixed in a molar ratio of Sr : La : Fe : Co = 0.70 : 0.30 : 11.70 : 0.30, that the temperature of the primary firing was changed to 1250 °C from 1100 °C and that the secondary firing was not carried out.

The composition analysis of the ferrite powder for bonded magnet was carried out by the same method as that in Example 1. As a result, the ferrite powder for bonded magnet was detected to contain 0.1 % by weight of Cr₂O₃, 0.3 % by weight of MnO, 85.3 % by weight of Fe₂O₃, 2.4 % by weight of Co₂O₃, 7.0 % by weight of SrO and 4.9 % by weight of La₂O₃, so that Sr, La, Fe and Co being the main components of the ferrite powder for bonded magnet were detected. Furthermore, although elements, such as Cr and Mn, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.31, y = 0.026, n = 11.3 and z = 1.12.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.26 *µ*m, the specific surface area was 2.19 m²/g, and the compression density (CD) was 3.34 g/cm³. The coercivity iHc of the pressurized powder body was 3590 Oe, and the residual magnetization Br thereof was 1830 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3332 Oe, the residual magnetization Br was 2882 G, and the maximum energy product BHₘₐₓ was 2.04 MGOe. The aspect ratio was 1.56.

### [Comparative Example 2]

A ferrite powder for bonded magnet was obtained by the same method as that in Comparative Example 1, except that the temperature of the primary firing was 1200 °C.

The composition analysis of the ferrite powder for bonded magnet was carried out by the same method as that in Example 1. As a result, the ferrite powder for bonded magnet was detected to contain 0.1 % by weight of Cr₂O₃, 0.3 % by weight of MnO, 85.3 % by weight of Fe₂O₃, 2.4 % by weight of Co₂O₃, 7.1 % by weight of SrO and 4.7 % by weight of La₂O₃, so that Sr, La, Fe and Co being the main components of the ferrite powder for bonded magnet were detected. Furthermore, although elements, such as Cr and Mn, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.30, y = 0.026, n = 11.3 and z = 1.09.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.25 *µ*m, the specific surface area was 2.21 m²/g, and the compression density (CD) was 3.26 g/cm³. The coercivity iHc of the pressurized powder body was 3950 Oe, and the residual magnetization Br thereof was 1790 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 3609 Oe, the residual magnetization Br was 2867 G, and the maximum energy product BHₘₐₓ was 2.02 MGOe. The aspect ratio was 1.62.

### [Comparative Example 3]

A ferrite powder for bonded magnet was obtained by the same method as that in Comparative Example 1, except that the temperature of the primary firing was 1300 °C.

The composition analysis of the ferrite powder for bonded magnet was carried out by the same method as that in Example 1. As a result, the ferrite powder for bonded magnet was detected to contain 0.1 % by weight of Cr₂O₃, 0.3 % by weight of MnO, 85.4 % by weight of Fe₂O₃, 2.4 % by weight of Co₂O₃, 7.0 % by weight of SrO and 4.7 % by weight of La₂O₃, so that Sr, La, Fe and Co being the main components of the ferrite powder for bonded magnet were detected. Furthermore, although elements, such as Cr and Mn, considered to be derived from impurities in the raw materials, were detected, the amount of each of the elements was a very small amount of 0.3 % when the elements were converted into oxides. Assuming that the very small amounts (1.0 % by weight or less when the elements were converted into oxides) of the elements were impurities, if the chemical formula of the ferrite powder for bonded magnet was expressed as (Sr₁₋ₓLaₓ) · (Fe_{1-y}Co_{y})ₙO_{19-z} from the analyzed values of Sr, La, Fe and Co being the main components, x, y, n and z were calculated to be x = 0.30, y = 0.026, n = 11.4 and z = 0.95.

With respect to this ferrite powder for bonded magnet, the average particle diameter, specific surface area and compression density (CD) thereof, and the coercivity iHc and residual magnetization Br of the pressurized powder body thereof were measured by the same methods as those in Example 1. As a result, the average particle diameter was 1.22 *µ*m, the specific surface area was 2.41 m²/g, and the compression density (CD) was 3.42 g/cm³. The coercivity iHc of the pressurized powder body was 3140 Oe, and the residual magnetization Br thereof was 1800 G.

This ferrite powder for bonded magnet was used for obtaining a bonded magnet by the same method as that in Example 1. With respect to this bonded magnet, the coercivity iHc, residual magnetization Br and maximum energy product BHₘₐₓ thereof were measured by the same methods as those in Example 1, and the aspect ratio thereof was calculated by the same method as that in Example 1. As a result, the coercivity iHc was 2885 Oe, the residual magnetization Br was 2930 G, and the maximum energy product BHₘₐₓ was 2.11 MGOe. The aspect ratio was 1.58.

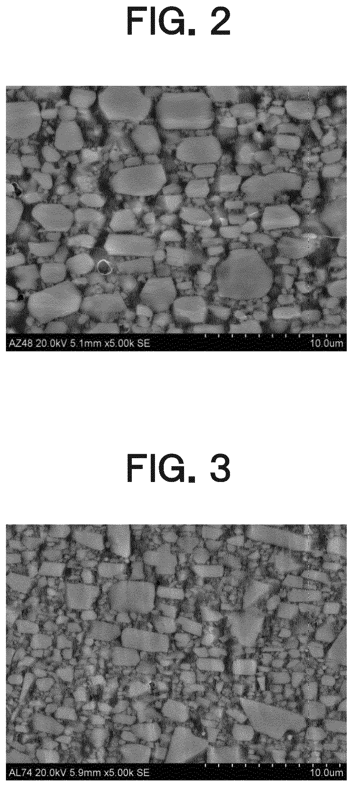

The results of these examples and comparative examples are shown in Tables 1-4. The scanning electron microscope (SEM) images of the cross-sections of the bonded magnets obtained in Example 1 and Comparative Example 1 are shown in FIGS. 1 and 2, respectively.

**Table 1**

| | Primary Firing | | Secondary Firing | |
|---|---|---|---|---|
| | Raw Material Ratio Sr : La : Fe : Co | Firing Temp. (°C) | Fe/(Sr + La) (Molar Ratio) | Firing Temp. (°C) |
| Ex. 1 | 0.70 : 0.30 : 0.70 : 0.30 | 1100 | 10.0 | 1250 |
| Ex.2 | 0.70 : 0.30 : 0.70 : 0.30 | 1100 | 10.0 | 1250 |
| Ex.3 | 0.70 : 0.30 : 0.70 : 0.30 | 1100 | 10.0 | 1250 |
| Ex.4 | 0.70 : 0.30 : 0.70 : 0.30 | 1100 | 10.0 | 1150 |
| Ex.5 | 0.70 : 0.30 : 0.70 : 0.30 | 1100 | 10.4 | 1250 |
| Ex.6 | 0.70 : 0.30 : 0.85 : 0.15 | 1100 | 10.0 | 1250 |
| Ex.7 | 0.70 : 0.30 : 0.85 : 0.15 | 1100 | 10.0 | 1300 |
| Ex.8 | 0.70 : 0.30 : 0.85 : 0.15 | 1100 | 10.0 | 1200 |
| Ex.9 | 0.70 : 0.30 : 0.85 : 0.15 | 1100 | 9.8 | 1250 |
| Ex.10 | 0.70 : 0.30 : 0.85 : 0.15 | 1100 | 10.4 | 1250 |
| Ex. 11 | 0.80 : 0.20 : 0.80 : 0.20 | 1100 | 10.0 | 1250 |
| Ex. 12 | 0.80 : 0.20 : 0.90 : 0.10 | 1100 | 10.0 | 1250 |
| Ex.13 | 0.90 : 0.10 : 0.90 : 0.10 | 1100 | 10.0 | 1250 |
| Ex. 14 | 0.70 : 0.30 : 0.85 : 0.15 | 1200 | 10.0 | 1250 |
| Ex.15 | 0.70 : 0.30 : 0.85 : 0.15 | 1050 | 10.0 | 1250 |
| Comp.1 | 0.70 : 0.30 : 10.70 : 0.30 | 1250 | - | - |
| Comp.2 | 0.70 : 0.30 : 10.70 : 0.30 | 1200 | - | - |
| Comp.3 | 0.70 : 0.30 : 10.70 : 0.30 | 1300 | - | - |

**Table 2**

| | Wet Pulverizing Time (minute) | Annealing (°C) | (Sr₁₋ₓLaₓ) • (Fe_{1-y}Co_{y})ₙO_{19-z} | | | |
|---|---|---|---|---|---|---|
| | | | x | y | n | z |
| Ex.1 | 20 | 985 | 0.32 | 0.026 | 11.5 | 0.79 |
| Ex.2 | 40 | 985 | 0.32 | 0.028 | 11.6 | 0.64 |
| Ex.3 | 80 | 985 | 0.32 | 0.028 | 11.5 | 0.79 |
| Ex.4 | 20 | 985 | 0.31 | 0.029 | 11.5 | 0.83 |
| Ex.5 | 20 | 985 | 0.31 | 0.026 | 12.0 | -0.04 |
| Ex.6 | 20 | 985 | 0.32 | 0.014 | 11.5 | 0.73 |
| Ex.7 | 20 | 985 | 0.32 | 0.013 | 11.5 | 0.61 |
| Ex.8 | 20 | 985 | 0.32 | 0.014 | 11.4 | 0.85 |
| Ex.9 | 20 | 985 | 0.33 | 0.015 | 11.0 | 1.46 |
| Ex.10 | 20 | 985 | 0.31 | 0.014 | 11.7 | 0.41 |
| Ex. 11 | 20 | 985 | 0.22 | 0.018 | 11.5 | 0.67 |
| Ex. 12 | 20 | 985 | 0.20 | 0.010 | 11.5 | 0.74 |
| Ex.13 | 20 | 985 | 0.15 | 0.010 | 11.6 | 0.53 |
| Ex. 14 | 20 | 985 | 0.32 | 0.014 | 11.3 | 0.90 |
| Ex.15 | 20 | 985 | 0.34 | 0.014 | 11.7 | 0.40 |
| Comp.1 | 20 | 985 | 0.31 | 0.026 | 11.3 | 1.12 |
| Comp.2 | 20 | 985 | 0.30 | 0.026 | 11.3 | 1.09 |
| Comp.3 | 20 | 985 | 0.30 | 0.026 | 11.4 | 0.95 |

**Table 3**

| | Ferrite Powder for Bonded Magnet | | | | | | |
|---|---|---|---|---|---|---|---|
| | Average Particle Diameter (µm) | SSA (m²/g) | CD (g/cm³) | iHc (Oe) | Br (G) | Aspect Ratio | Hc Temp. Coef. (% /°C) |
| Ex.1 | 1.72 | 1.47 | 3.45 | 3060 | 1870 | 1.43 | -0.024 |
| Ex.2 | 1.62 | 1.62 | 3.40 | 3130 | 1870 | 1.54 | - |
| Ex.3 | 1.42 | 1.96 | 3.42 | 3310 | 1870 | 1.50 | - |
| Ex.4 | 1.53 | 1.65 | 3.29 | 3410 | 1820 | 1.54 | - |
| Ex.5 | 1.70 | 1.56 | 3.40 | 2780 | 1890 | 1.53 | - |
| Ex.6 | 1.87 | 1.27 | 3.43 | 2650 | 1880 | 1.52 | -0.063 |
| Ex.7 | 1.84 | 1.36 | 3.49 | 2390 | 1910 | 1.49 | - |
| Ex.8 | 1.71 | 1.49 | 3.40 | 2870 | 1870 | 1.47 | - |
| Ex.9 | 1.90 | 1.32 | 3.41 | 2840 | 1840 | 1.50 | - |
| Ex10 | 1.97 | 1.21 | 3.39 | 2540 | 1870 | 1.51 | - |
| Ex.11 | 1.98 | 1.20 | 3.40 | 2600 | 1870 | 1.49 | 0.020 |
| Ex.12 | 2.11 | 1.11 | 3.45 | 2340 | 1890 | 1.43 | 0.052 |
| Ex.13 | 2.01 | 1.09 | 3.39 | 2290 | 1920 | 1.44 | 0.056 |
| Ex.14 | 1.62 | 1.53 | 3.40 | 3010 | 1570 | 1.49 | - |
| Ex.15 | 1.88 | 1.21 | 3.41 | 2950 | 1850 | 1.53 | - |
| Comp.1 | 1.26 | 2.19 | 3.34 | 3590 | 1830 | 1.56 | - |
| Comp.2 | 1.25 | 2.21 | 3.26 | 3950 | 1790 | 1.62 | - |
| Comp.3 | 1.22 | 2.41 | 3.42 | 3140 | 1800 | 1.58 | - |

**Table 4**

| | Bonded Magnet | | |
|---|---|---|---|
| | iHc (Oe) | Br (G) | BHmax (MGOe) |
| Ex.1 | 3017 | 3069 | 2.33 |
| Ex.2 | 3052 | 3038 | 2.28 |
| Ex.3 | 3193 | 3036 | 2.28 |
| Ex.4 | 3407 | 2985 | 2.21 |
| Ex.5 | 2546 | 3009 | 2.23 |
| Ex.6 | 2724 | 3038 | 2.29 |
| Ex.7 | 2473 | 3043 | 2.29 |
| Ex.8 | 2865 | 3061 | 2.32 |
| Ex.9 | 3038 | 3004 | 2.23 |
| Ex.10 | 2564 | 3013 | 2.24 |
| Ex. 11 | 2748 | 3031 | 2.26 |
| Ex. 12 | 2371 | 3064 | 2.31 |
| Ex.13 | 2414 | 3038 | 2.27 |
| Ex. 14 | 3298 | 2999 | 2.24 |
| Ex.15 | 2880 | 2998 | 2.23 |
| Comp.1 | 3332 | 2882 | 2.04 |
| Comp.2 | 3609 | 2867 | 2.02 |
| Comp.3 | 2885 | 2930 | 2.11 |

It can be seen from the results of Examples 1-15 and Comparative Examples 1-3 that it is possible to produce a ferrite powder for bonded magnet, which can obtain a bonded magnet having a high residual magnetization Br by the magnetic field orientation thereof.

It can be seen that the ferrite powder for bonded magnet in each of Examples 1, 6 and 11-13 is a ferrite powder for bonded magnet, which is difficult to be affected by low-temperature demagnetization since the temperature coefficient of the coercivity Hc thereof is a very low value of not higher than 0.1 %/°C. In particular, it can be seen that the ferrite powder for bonded magnet in each of Examples 1 and 6 is a ferrite powder for bonded magnet, which is extremely difficult to be affected by low-temperature demagnetization since the temperature coefficient of the coercivity Hc thereof is a negative temperature coefficient.

## Claims

1. A method for producing a ferrite powder for bonded magnet, the method comprising the steps of:
mixing a complex oxide powder of iron, strontium, lanthanum and cobalt, with iron oxide to obtain a mixture;
granulating the mixture to obtain a granulated mixture; and
firing the granulated mixture, **characterized in that**
the complex oxide powder is obtained by a method comprising the steps of:
mixing strontium carbonate, lanthanum oxide, iron oxide and cobalt oxide to obtain a mixture;
granulating the mixture to obtain a granulated mixture;
firing the granulated mixture at a temperature of 1000 to 1250 °C to obtain a fired substance; and
pulverizing the fired substance.

2. A method for producing a ferrite powder for bonded magnet as set forth in claim 1, which further comprises the steps of:
coarsely pulverizing a fired substance, which is obtained by firing the granulated mixture, to obtain a coarsely pulverized powder;
pulverizing the coarsely pulverized powder to obtain a pulverized powder; and
annealing the pulverized powder.

3. A method for producing a ferrite powder for bonded magnet as set forth in claim 1, wherein said firing after granulating the mixture of said complex oxide powder and said iron oxide is carried out at a temperature of 1100 to 1400 °C.

4. A method for producing a ferrite powder for bonded magnet as set forth in claim 1, wherein said complex oxide powder is mixed with said iron oxide so that a molar ratio of Fe in said iron oxide to the total of Sr and La is in the range of from 4.5 to 11.7, when said complex oxide powder is mixed with said iron oxide.

5. A ferrite powder for bonded magnet, which has a composition of (Sr₁₋ₓLaₓ) · (Fe_{1-y}CO_{y})ₙO_{19-z} wherein 0 < x ≦ 0.5, 0 < y ≦ 0.04, 10.0 ≦ n ≦ 12.5, -1.0 ≦ z ≦ 3.5, and wherein the ferrite powder has an average particle diameter of 1.3 to 2.5 *µ* m.

6. A ferrite powder for bonded magnet as set forth in claim 5, which has a specific surface area of 1.0 to 2.1 m²/g.

7. A ferrite powder for bonded magnet as set forth in claim 5, wherein an average value of ratios is not greater than 1.55, each of the ratios being a ratio of a length of a major axis of a corresponding one of particles of the ferrite powder for bonded magnet to a length of a minor axis of the corresponding one of the particles, the length of the major axis of the corresponding one of the particles being 1.0 *µ* m or more.

8. A ferrite powder for bonded magnet as set forth in claim 5, wherein a bonded magnet has a residual magnetization Br of not less than 2950 x 10⁻⁴ T when the residual magnetization Br is measured in a measuring magnetic field of 79.5775 x 10⁴ A/m, the bonded magnet being a cylindrical bonded magnet having a diameter of 15 mm x a height of 8 mm, the direction of magnetic field orientation of the bonded magnet being a direction along the central axis thereof, the bonded magnet being produced by injection-molding a kneaded pellet having an average diameter of 2 mm at a temperature of 300 °C at a molding pressure of 8.5 N/mm² in a magnetic field of 9.7 x 79.5775 x 10³ A/m, the kneaded pellet being produced by kneading a mixture at 230 °C, the mixture being obtained by filling and mixing 90.0 parts by weight of the ferrite powder for bonded magnet, 0.8 parts by weight of a silane coupling agent, 0.8 parts by weight of a lubricant and 8.4 parts by weight of a polyamide resin powder in a mixer.

9. A ferrite powder for bonded magnet as set forth in claim 5, wherein said bonded magnet has a maximum energy product BHₘₐₓ of not less than 2.15 x 7.95775 kJ/m³ when the maximum energy product BHₘₐₓ is measured in a measuring magnetic field of 79.5775 x 10⁴ A/m.

10. A ferrite powder for bonded magnet as set forth in claim 5, which has a temperature coefficient of a coercivity Hc of not higher than 0.1 %/°C.

11. A bonded magnet comprising: a ferrite powder for bonded magnet as set forth in claim 5; and a binder.

## Patentansprüche

1. Verfahren zur Herstellung eines Ferrit-Pulvers für gebundenen Magnet, wobei das Verfahren die Schritte umfasst:
Vermischen eines Mischoxid-Pulvers von Eisen, Strontium, Lanthan und Kobalt mit Eisenoxid, um ein Gemisch zu erhalten;
Granulieren des Gemisches, um ein granuliertes Gemisch zu erhalten; und
Brennen des granulierten Gemisches,
**dadurch gekennzeichnet, dass**
das Mischoxid-Pulver durch ein Verfahren erhalten wird, das die Schritte umfasst:
Vermischen von Strontiumcarbonat, Lanthanoxid, Eisenoxid und Kobaltoxid, um ein Gemisch zu erhalten;
Granulieren des Gemisches, um ein granuliertes Gemisch zu erhalten;
Brennen des granulierten Gemisches bei einer Temperatur von 1000 bis 1250 °C, um eine gebrannte Substanz zu erhalten; und
Pulverisieren der gebrannten Substanz.

2. Verfahren zur Herstellung eines Ferrit-Pulvers für gebundenen Magnet nach Anspruch 1, welches zudem die Schritte umfasst:
grobes Pulverisieren einer gebrannten Substanz, welche durch Brennen des granulierten Gemisches erhalten ist, um ein grob pulverisiertes Pulver zu erhalten;
Pulverisieren des grob pulverisierten Pulvers, um ein pulverisiertes Pulver zu erhalten; und
Glühen des pulverisierten Pulvers.

3. Verfahren zur Herstellung eines Ferrit-Pulvers für gebundenen Magnet nach Anspruch 1, wobei das Brennen nach dem Granulieren des Gemisches des Mischoxid-Pulvers und des Eisenoxids bei einer Temperatur von 1100 bis 1400 °C durchgeführt wird.

4. Verfahren zur Herstellung eines Ferrit-Pulvers für gebundenen Magnet nach Anspruch 1, wobei das Mischoxid-Pulver so mit dem Eisenoxid vermischt wird, dass ein Molverhältnis von Fe in dem Eisenoxid zu der Gesamtmenge an Sr und La im Bereich von 4,5 bis 11,7 liegt, wenn das Mischoxid-Pulver mit dem Eisenoxid vermischt ist.

5. Ferrit-Pulver für gebundenen Magnet, welches eine Zusammensetzung von (Sr₁₋ₓLaₓ) · (Fe_{1-y}Co_{y})ₙO_{19-z} aufweist, wobei 0 < x ≤ 0,5, 0 < y ≤ 0,04, 10,0 ≤n ≤12,5, -1,0 ≤ z ≤3,5,
und wobei das Ferrit-Pulver einen mittleren Partikeldurchmesser von 1,3 bis 2,5 µm aufweist.

6. Ferrit-Pulver für gebundenen Magnet nach Anspruch 5, welches eine spezifische Oberfläche von 1,0 bis 2,1 m²/g aufweist.

7. Ferrit-Pulver für gebundenen Magnet nach Anspruch 5, wobei ein Mittelwert von Verhältnissen nicht größer als 1,55 ist, wobei jedes der Verhältnisse ein Verhältnis einer Länge einer Hauptachse eines entsprechenden von Partikeln des Ferrit-Pulvers für gebundenen Magnet zu einer Länge einer Nebenachse des entsprechenden der Partikel ist, wobei die Länge der Hauptachse des entsprechenden der Partikel 1,0 µm oder mehr beträgt.

8. Ferrit-Pulver für gebundenen Magnet nach Anspruch 5, wobei ein gebundener Magnet eine Restmagnetisierung Br von nicht weniger als 2950 × 10⁻⁴ T aufweist, wenn die Restmagnetisierung Br in einem Messmagnetfeld von 79,5775 × 10⁴ A/m gemessen ist, wobei der gebundene Magnet ein zylindrischer gebundener Magnet ist, der einen Durchmesser von 15 mm × eine Höhe von 8 mm aufweist, wobei die Magnetfeldorientierungsrichtung des gebundenen Magneten eine Richtung entlang seiner Mittelachse ist, wobei der gebundene Magnet hergestellt ist durch Spritzgießen eines gekneteten Pellets, das einen mittleren Durchmesser von 2 mm bei einer Temperatur von 300 °C bei einem Formdruck von 8,5 N/mm² in einem Magnetfeld von 9,7 × 79,5775 × 10³ A/m aufweist, wobei das geknetete Pellet hergestellt ist durch Kneten eines Gemisches bei 230 °C, wobei das Gemisch erhalten ist durch Einfüllen und Vermischen von 90,0 Gewichtsteilen des Ferrit-Pulvers für gebundenen Magnet, 0,8 Gewichtsteilen eines Silan-Kopplungsmittels, 0,8 Gewichtsteilen eines Schmiermittels und 8,4 Gewichtsteilen eines Polyamidharz-Pulvers in einem Mischer.

9. Ferrit-Pulver für gebundenen Magnet nach Anspruch 5, wobei der gebundene Magnet ein maximales Energieprodukt BHₘₐₓ von nicht weniger als 2,15 × 7,95775 kJ/m³ aufweist, wenn das maximale Energieprodukt in einem Messmagnetfeld von 79,5775 10⁴ A/m gemessen ist.

10. Ferrit-Pulver für gebundenen Magnet nach Anspruch 5, welches einen Temperaturkoeffizienten einer Koerzitivfeldstärke Hc von nicht höher als 0,1 %/°C aufweist.

11. Gebundener Magnet, umfassend: ein Ferrit-Pulver für gebundenen Magnet nach Anspruch 5; und ein Bindemittel.

## Revendications

1. Procédé de production d'une poudre de ferrite pour un aimant lié, le procédé comprenant les étapes consistant à :
mélanger une poudre d'oxyde complexe de fer, strontium, lanthane et cobalt,
avec un oxyde de fer pour obtenir un mélange ;
granuler le mélange pour obtenir un mélange granulé ; et
cuire le mélange granulé,
**caractérisé en ce que**
la poudre d'oxyde complexe est obtenue par un procédé comprenant les étapes consistant à :
mélanger un carbonate de strontium, un oxyde de lanthane, un oxyde de fer et un oxyde de cobalt pour obtenir un mélange ;
granuler le mélange pour obtenir un mélange granulé ; et
cuire le mélange granulé à une température de 1 000 à 1 250 °C pour obtenir une substance cuite ; et
pulvériser la substance cuite.

2. Procédé de production d'une poudre de ferrite pour un aimant lié selon la revendication 1, qui comprend en outre les étapes consistant à :
pulvériser grossièrement une substance cuite, qui est obtenue en cuisant le mélange granulé, pour obtenir une poudre grossièrement pulvérisée ;
pulvériser la poudre grossièrement pulvérisée pour obtenir une poudre pulvérisée ; et
recuire la poudre pulvérisée.

3. Procédé de production d'une poudre de ferrite pour un aimant lié selon la revendication 1, dans lequel ladite étape de cuisson après granulation du mélange de ladite poudre d'oxyde complexe et dudit oxyde de fer est exécutée à une température de 1 100 à 1 400 °C.

4. Procédé de production d'une poudre de ferrite pour un aimant lié selon la revendication 1, dans lequel ladite poudre d'oxyde complexe est mélangée avec ledit oxyde de fer de telle sorte qu'un rapport molaire de Fe dans ledit oxyde de fer sur le total de Sr et La est dans la plage allant de 4,5 à 11,9, quand ladite poudre d'oxyde complexe est mélangée audit oxyde de fer.

5. Poudre de ferrite pour un aimant lié, qui a une composition (Sr₁₋ₓLaₓ) • (Fe_{1-y}Co_{y})ₙO_{19-z} dans laquelle
0 < x ≦ 0,5, 0 < y ≦ 0,04, 10,0 ≦ n ≦ 12,5, -1,0 ≦ z ≦ 3,5, et dans laquelle la poudre de ferrite a un diamètre particulaire moyen de 1,3 à 2,5 µm.

6. Poudre de ferrite pour un aimant lié selon la revendication 5, qui a une superficie spécifique de 1,0 à 2,1 m²/g.

7. Poudre de ferrite pour un aimant lié selon la revendication 5, dans laquelle une valeur moyenne de rapports n'est pas supérieure à 1,55, chacun des rapports étant un rapport d'une longueur d'un axe majeur d'une particule correspondante parmi des particules de la poudre de ferrite pour un aimant lié, sur une longueur d'un axe mineur de l'une correspondante des particules, la longueur de l'axe majeur de l'une correspondante des particules étant de 1,0 µm ou plus.

8. Poudre de ferrite pour un aimant lié selon la revendication 5, dans laquelle un aimant lié a une magnétisation rémanente Br qui n'est pas inférieure à 2 950 × 10⁻⁴ T quand la magnétisation rémanente Br est mesurée dans un champ magnétique de mesurage de 79,5775 × 10⁴ A/m, l'aimant lié étant un aimant lié cylindrique ayant un diamètre de 15 mm × une hauteur de 8 mm, la direction d'orientation de champ magnétique de l'aimant lié étant une direction le long de l'axe central de celui-ci, l'aimant lié étant produit par moulage par injection d'un pellet pétri ayant un diamètre moyen de 2 mm à une température de 300 °C à une pression de moulage de 8,5 N/mm² dans un champ magnétique de 9,7 × 79,5775 × 10³ A/m, le pellet pétri étant produit en pétrissant un mélange à 230 °C, le mélange étant obtenu en remplissant et en mélangeant 90,0 parts en poids de la poudre de ferrite pour un aimant lié, 0,8 part en poids d'un agent de couplage silane, 0,8 part en poids d'un lubrifiant, et 8,4 parts en poids d'une poudre de résine polyamide dans un mélangeur.

9. Poudre de ferrite pour un aimant lié selon la revendication 5, dans laquelle ledit aimant lié a un produit énergétique maximum BHₘₐₓ qui n'est pas inférieur à 2,15 × 7,95775 kJ/m³ quand le produit énergétique maximum BHₘₐₓ est mesuré dans un champ magnétique de mesurage de 79,5775 × 10⁴ A/m.

10. Poudre de ferrite pour un aimant lié selon la revendication 5, qui a un coefficient de température de coercivité Hc qui n'est pas supérieur à 0,1 %/°C.

11. Aimant lié comprenant : une poudre de ferrite pour un aimant lié selon la revendication 5 ; et un liant.
